# DEMANDE DE BREVET EUROPEEN

(11) **EP 3 809 488 A1**
(43) Date de publication de la demande: **21.04.2021**
(21) Numéro de dépôt: 20201832.1
(22) Date de dépôt: 14.10.2020
(51) Int. Cl.: H01M 2/20, H01M 2/22, H01M 6/50, H01M 10/60

(54) **BATTERIE D'ACCUMULATEURS FACTICE**

(30) Priorité: 16.10.2019 FR 1911536
(71) Demandeur: Commissariat à l'Energie Atomique et aux Energies Alternatives, 75015 Paris (FR)
(72) Inventeur: PRA, Franck, 38054 GRENOBLE CEDEX 9 (FR); DUCROS, Frédéric, 38054 GRENOBLE CEDEX 9 (FR); MARIOTTO, Mathieu, 38054 GRENOBLE CEDEX 9 (FR)
(74) Mandataire: Cabinet Beaumont

(57) **Abrégé**

La présente description concerne une batterie d'accumulateurs factice (1) comprenant au moins une première cellule électrochimique de stockage d'énergie factice (10) et un premier élément de connexion (12) en contact avec la première cellule factice. Le premier élément de connexion est en un premier matériau conducteur thermiquement. La batterie d'accumulateurs factice comprend en outre un premier élément chauffant (14) en contact avec le premier élément de connexion.

## Description

### Domaine technique

La présente description concerne une batterie d'accumulateurs électriques factice utilisée pour simuler le comportement thermique d'une batterie d'accumulateurs électriques.

### Technique antérieure

Le contrôle du comportement thermique d'une batterie d'accumulateurs électriques, également appelée pack batterie, présente plusieurs avantages :
- il permet notamment de faire fonctionner les accumulateurs, également appelés cellules par la suite, de façon optimale en termes de restitution d'énergie et de puissance électrique stockée ;
- il permet d'assurer une durée de vie la plus grande possible des accumulateurs ;
- il permet en cas d'accidents de contenir les défauts et de préserver la plus grande partie du pack batterie ; et
- il permet de détecter la présence d'anomalies et d'anticiper des solutions pour continuer à assurer les trois fonctions précédentes.

De nombreux essais doivent être réalisés pour déterminer les algorithmes à mettre en oeuvre pour le contrôle du comportement thermique du pack batterie. Une possibilité pour réaliser les essais est d'utiliser de véritables accumulateurs. Toutefois, ceci présente plusieurs inconvénients. Un premier inconvénient est que les essais impliquant l'utilisation de véritables accumulateurs doivent être réalisés avec des précautions particulières, notamment des dispositifs de sécurité adaptés, et éventuellement avec des autorisations légales particulières. En particulier, il peut être délicat avec des accumulateurs réels d'augmenter la température sans dispositifs de sécurité car cela peut conduire à un emballement thermique de la batterie d'accumulateurs et à une destruction de la batterie. Le coût des essais peut alors être important. En outre, certains essais peuvent entraîner la destruction des accumulateurs et, éventuellement, celle des instruments utilisés pour réaliser les essais, ce qui n'est pas souhaitable notamment si de nombreux essais sont réalisés. Un deuxième inconvénient est qu'il peut être difficile, avec de véritables accumulateurs, de reproduire de manière identique les comportements des accumulateurs dus à des défauts ou lors d'incidents, notamment en raison de variabilité des réactions électrochimiques mises en jeu avec de véritables accumulateurs.

Un accumulateur électrique comprend généralement au moins une cellule électrochimique de stockage d'énergie. Il est connu d'utiliser des cellules factices afin de reproduire, sans les inconvénients décrits précédemment, le comportement thermique des accumulateurs d'un pack batterie. Un accumulateur comprenant une cellule factice est appelé accumulateur factice. Il est notamment plus simple de simuler une augmentation de température avec des accumulateurs factices puisqu'il n'y a pas de risques d'emballement. Un accumulateur factice a généralement les mêmes dimensions extérieures qu'un véritable accumulateur. De plus, on cherche à ce que le comportement thermique de l'accumulateur factice s'approche de celui d'un véritable accumulateur. En particulier, comme pour un véritable accumulateur, on cherche à ce que la conductivité thermique de l'accumulateur factice soit anisotrope. De plus, on cherche à ce que la masse volumique et la chaleur spécifique de l'accumulateur factice s'approchent de celles d'un véritable accumulateur.

Le document EP3525273 décrit des exemples d'accumulateurs factices. Même si les exemples d'accumulateurs factices décrits dans ce document peuvent simuler de façon satisfaisante le comportement thermique d'un véritable accumulateur électrique, ils peuvent ne pas permettre de simuler de façon convenable le comportement thermique d'un pack batterie.

### Résumé de l'invention

Ainsi, un objet d'un mode de réalisation est de prévoir une batterie d'accumulateurs factice qui pallie au moins certains des inconvénients des batteries d'accumulateurs factices décrites précédemment.

Selon un autre objet d'un mode de réalisation, la structure de la batterie d'accumulateurs factice permet une adaptation rapide et simple pour la simulation du comportement thermique de batteries d'accumulateurs ayant des configurations géométriques différentes, des propriétés thermiques différentes et/ou des propriétés massiques différentes.

Un mode de réalisation prévoit une batterie d'accumulateurs factice comprenant au moins une première cellule électrochimique de stockage d'énergie factice et un premier élément de connexion en contact avec la première cellule factice, ledit premier élément de connexion étant en un premier matériau conducteur thermiquement, la batterie d'accumulateurs factice comprenant en outre un premier élément chauffant en contact avec le premier élément de connexion.

Selon un mode de réalisation, la batterie d'accumulateurs factice comprend deux conducteurs électriques connectés audit premier élément chauffant.

Selon un mode de réalisation, la batterie d'accumulateurs factice comprend une enceinte contenant la première cellule factice, les conducteurs électriques s'étendant au moins en partie à l'extérieur de l'enceinte.

Selon un mode de réalisation, la batterie d'accumulateurs factice comprend en outre une deuxième cellule électrochimique de stockage d'énergie factice et un deuxième élément de connexion en contact avec la deuxième cellule factice, ledit deuxième élément de connexion étant en un deuxième matériau conducteur thermiquement, identique ou différent du premier matériau conducteur thermiquement, la batterie d'accumulateurs factice comprenant en outre un deuxième élément chauffant en contact avec le deuxième élément de connexion.

Selon un mode de réalisation, la batterie d'accumulateurs factice comprend en outre un troisième élément de connexion, en un troisième matériau conducteur thermiquement, identique ou différent du premier matériau conducteur thermiquement, connecté au premier élément de connexion et au deuxième élément de connexion, la batterie d'accumulateurs factice comprenant en outre un troisième élément chauffant en contact avec le troisième élément de connexion.

Selon un mode de réalisation, la première cellule factice comprend, dans une enveloppe :
- une alternance de plaques conductrices thermiquement et de plaques isolantes thermiquement ;
- au moins, pour l'une des plaques isolantes thermiquement interposées entre deux plaques conductrices thermiquement, un pont thermique conducteur thermiquement présent dans ladite plaque isolante thermiquement et connecté mécaniquement auxdites deux plaques conductrices thermiquement ; et
- au moins un élément résistif et des fils électriques connectés à l'élément résistif et s'étendant à l'extérieur de l'enveloppe.

Selon un mode de réalisation, la batterie d'accumulateurs factice comprend au moins deux ponts thermiques conducteurs thermiquement connectés à des plaques conductrices thermiquement différentes.

Selon un mode de réalisation, les plaques conductrices thermiquement et les plaques isolantes thermiquement sont planes ou cylindriques.

Selon un mode de réalisation, les plaques conductrices thermiquement sont métalliques.

Selon un mode de réalisation, les plaques isolantes thermiquement sont en polymère.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue en coupe, partielle et schématique, d'un mode de réalisation d'un accumulateur factice ;
la figure 2 est une vue en perspective, partielle et schématique, d'un mode de réalisation d'un collecteur de courant factice ;
la figure 3 est une vue en coupe, partielle et schématique, d'un mode de réalisation d'un pack batterie factice ;
la figure 4 est une vue en perspective avec coupe, partielle et schématique, d'un mode de réalisation d'une cellule électrochimique factice ;
la figure 5 est une vue agrandie d'une partie de la figure 4 ;
la figure 6 est une vue en perspective avec coupe, partielle et schématique, d'un autre mode de réalisation d'une cellule électrochimique factice ; et
la figure 7 est une vue analogue à la figure 6 avec une autre coupe.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques. Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures ou à un pack batterie dans une position normale d'utilisation. Sauf précision contraire, les expressions "environ", "approximativement", "sensiblement", et "de l'ordre de" signifient à 10 % près, de préférence à 5 % près. De plus, un matériau conducteur électriquement est un matériau dont la conductivité électrique est supérieure ou égale à 1000 S/m et un matériau isolant électriquement est un matériau dont la résistivité électrique est supérieure ou égale à 10⁵ Ω/m. De plus, un matériau conducteur thermiquement est un matériau dont la conductivité thermique est supérieure ou égale à 50 W/(m.K) et un matériau isolant thermiquement est un matériau dont la conductivité thermique est inférieure ou égale à 1 W/(m.K).

Dans la suite de la description, on appelle accumulateur électrique, par exemple un accumulateur du type lithium-ion, l'ensemble comprenant au moins une cellule électrochimique de stockage de l'électricité et les éléments de connexion, également appelés dans ce cas collecteurs de courant, reliant la cellule électrochimique aux bornes, également appelées plots, positives et négatives de l'accumulateur électrique, et on appelle batterie d'accumulateurs électriques, également appelé pack batterie, un unique accumulateur électrique ou des accumulateurs électriques connectés entre eux, en série ou en parallèle, par des éléments de connexion, également appelés dans ce cas barres omnibus ou jeux de barres (en anglais busbars). Un accumulateur électrique peut comprendre une seule cellule électrochimique ou deux ou plus de deux cellules électrochimiques, chaque cellule électrochimique étant alors reliée aux bornes positive et négative de l'accumulateur électrique par des collecteurs de courant.

Selon un mode de réalisation, un pack batterie factice est réalisé à partir d'accumulateurs factices qui sont reliés entre eux par des éléments de connexion factices. Les éléments de connexion factices sont en un matériau conducteur thermiquement. En outre, des éléments chauffants commandables sont disposés sur au moins certains des éléments de connexion factices.

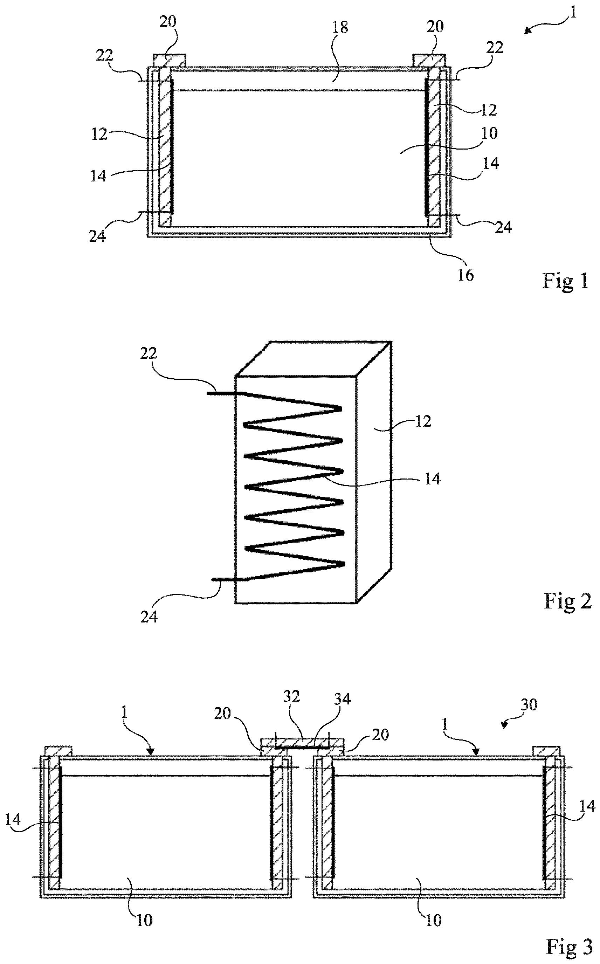

La figure 1 est une vue en coupe, partielle et schématique, d'un mode de réalisation d'un accumulateur factice 1. L'accumulateur factice 1 comprend une cellule factice 10, représentée de façon schématique par un rectangle sur la figure 1. La cellule factice 10 permet de reproduire le comportement thermique d'une véritable cellule électrochimique. Selon un mode de réalisation, la cellule factice 10 peut avoir la structure décrite dans le document EP3525273 comme cela sera décrit plus en détail par la suite. L'accumulateur factice 1 comprend en outre deux collecteurs de courant factices 12 au contact de la cellule factice 10. L'accumulateur factice 1 comprend, au moins pour certains des collecteurs factices 12, de préférence pour chaque collecteur factice 12, un élément chauffant commandable 14 au contact en totalité ou en partie d'une surface du collecteur factice 12 et/ou situé en totalité ou en partie à l'intérieur du collecteur factice 12. A titre d'exemple, en figure 1, les éléments chauffants commandables 14 sont représentés interposés entre les collecteurs factices 12 et la cellule factice 10. L'élément chauffant commandable 14 peut être fixé au collecteur 12 par une colle conductrice thermiquement.

Dans le présent mode de réalisation, l'accumulateur factice 1 comprend en outre une enceinte 16 contenant la cellule factice 10 et au moins en partie les collecteurs factices 12. Un espace 18, rempli d'un matériau gazeux, liquide, ou solide, isolant électriquement, par exemple de l'air, peut être prévu entre l'enceinte 16 et la cellule factice 10. Chaque collecteur factice 12 comprend une portion 20, également appelée borne, qui s'étend à l'extérieur de l'enceinte 16 et qui permet de relier électriquement l'accumulateur factice 1 à un autre élément. L'accumulateur factice 1 comprend deux bornes 20 : une borne positive et une borne négative. A titre de variante, l'enceinte 16 peut ne pas être présente. A titre de variante, l'accumulateur factice 1 peut comprendre deux ou plus de deux cellules factices 10 et, pour chaque cellule factice, des collecteurs factices 12 reliant les cellules factices aux bornes 20 positives et négatives de l'accumulateur factice 1.

Selon un mode de réalisation, l'élément chauffant commandable 14 correspond à un fil chauffant ou à un tissu chauffant. Chaque élément chauffant commandable 14 peut être alimenté en électricité par l'intermédiaire de deux conducteurs électriques 22, 24, qui s'étendent en partie à l'extérieur de l'enceinte 16, et qui sont destinés à être connectés à un générateur, non représenté. De la chaleur est alors produite par l'élément chauffant commandable 14 par effet Joule lors de la circulation d'un courant dans l'élément chauffant commandable 14, la quantité de chaleur produite dépendant notamment de l'intensité du courant circulant dans l'élément chauffant commandable 14. La section de passage de chaque collecteur 12 peut correspondre à la section de passage du collecteur de l'accumulateur réel dont le comportement thermique est simulé par l'accumulateur factice 1. La section de passage est généralement adaptée au courant nominal fourni par l'accumulateur réel dont le comportement thermique est simulé par l'accumulateur factice 1. Selon un mode de réalisation, la section de passage de chaque collecteur 12 varie entre une section de 0,1 mm par 5 mm et une section de 0,5 mm par 10 mm.

La figure 2 illustre de façon schématique un exemple d'agencement d'un élément chauffant commandable 14, correspondant dans le présent mode de réalisation à un fil chauffant, sur le collecteur 12.

La figure 3 est une vue en coupe, partielle et schématique, d'un mode de réalisation d'un pack batterie factice 30. Dans le présent mode de réalisation, le pack batterie factice 30 comprend des premier et deuxième accumulateurs factices 1 connectés entre eux par une barre omnibus 32 fixée, à une extrémité, à l'une des bornes 20 du premier accumulateur factice 1 et fixée, à l'extrémité opposée, à l'une des bornes 20 du deuxième accumulateur factice 1. La section de passage de la barre omnibus 32 peut correspondre à la section de passage de la barre omnibus d'un pack batterie réel dont le comportement thermique est simulé par le pack batterie factice 30. La section de passage est généralement adaptée au courant nominal fourni par le pack batterie réel dont le comportement thermique est simulé par le pack batterie factice 30. Selon un mode de réalisation, la section de passage de chaque barre omnibus 32 varie entre une section de 0,1 mm par 5 mm et une section de 2 mm par 20 mm. Le pack batterie factice 30 comprend en outre un élément chauffant commandable 34 au contact en totalité ou en partie d'une surface de la barre omnibus 32 et/ou situé en totalité ou en partie à l'intérieur de la barre omnibus 32. L'élément chauffant commandable 34 peut avoir la même structure que l'élément chauffant commandable 14 décrit précédemment. De façon générale, le pack batterie factice 30 peut comprendre plus de deux accumulateurs factices 1, par exemple de 3 à plus de cent accumulateurs factices 1, ces accumulateurs factices 1 étant connectés entre eux, en série et/ou en parallèle, par l'intermédiaire de barres omnibus 32. Les accumulateurs factices 1 du pack batterie 30 peuvent être identiques ou différents. Le pack batterie factice 30 peut comprendre d'autres éléments de connexion non représentés, par exemple des éléments de connexion permettant la connexion électrique à un circuit externe du pack batterie dont le comportement thermique est simulé par le pack batterie factice 30.

Selon un mode de réalisation, chaque élément de connexion factice, notamment chaque collecteur de courant 12 et chaque barre omnibus 32, est en un matériau dont la masse volumique est comprise entre 2000 kg/m³ et 10000 kg/m³. Selon un mode de réalisation, chaque élément de connexion factice, notamment chaque collecteur de courant 12 et chaque barre omnibus 32, est en un matériau dont la chaleur spécifique, également appelée capacité thermique massique, à 20°C est comprise entre 200 Jkg⁻¹K⁻¹ et 900 Jkg⁻¹K⁻¹, de préférence entre 300 Jkg⁻¹K⁻¹ et 600 Jkg⁻¹K⁻¹. Selon un mode de réalisation, chaque élément de connexion factice, notamment chaque collecteur de courant 12 et chaque barre omnibus 32, est en un matériau dont la conductivité thermique est comprise entre 20 Wm⁻¹K⁻¹ et 500 Wm⁻¹K⁻¹. Selon un mode de réalisation, chaque élément de connexion factice, notamment chaque collecteur de courant 12 et chaque barre omnibus 32, est en un matériau compris dans le groupe comprenant le cuivre, l'aluminium, le laiton et l'acier. Selon un mode de réalisation, un élément de connexion factice, notamment un collecteur de courant 12 ou une barre omnibus 32, a la même structure que le véritable élément de connexion correspondant utilisé sur le véritable accumulateur/pack batterie dont le comportement thermique est simulé par l'accumulateur factice 1/pack batterie factice 30. A titre de variante, un élément de connexion factice, notamment un collecteur de courant 12 ou une barre omnibus 32, peut avoir une structure proche, mais simplifiée, par rapport au véritable élément de connexion correspondant utilisé sur le véritable accumulateur/pack batterie, de façon à réduire le coût de fabrication de l'élément de connexion factice.

Chaque élément chauffant commandable 14, 34 est un composant électrique émettant par effet Joule une puissance thermique de niveau commandable. Chaque élément chauffant commandable 14, 34 est isolé électriquement de l'élément de connexion 12, 32 avec lequel il est en contact.

L'enceinte 16 de l'accumulateur factice 1 peut avoir la même structure que l'enceinte qui est présente dans un véritable accumulateur électrique. L'enceinte 16 est par exemple en aluminium.

Selon un mode de réalisation, l'accumulateur factice 1 ou le pack batterie 30 peut comprendre des capteurs de température, non représentés. Des capteurs de température, notamment des thermocouples, peuvent être disposés sur les cellules factices 10 ou dans les cellules factices 10. Des capteurs de température, notamment des thermocouples, peuvent être disposés sur les éléments de connexion ou insérés dans les éléments de connexion, notamment les collecteurs 12 et les barres omnibus 32. A titre de variante, les cellules factices 10 et/ou les éléments de connexion peuvent être recouverts d'une peinture thermoréactive, c'est-à-dire une peinture dont la couleur varie en fonction de la température.

Selon un mode de réalisation, une cellule électrochimique factice comprend un empilement de plaques conductrices électriquement et de plaques isolantes électriquement. De ce fait, la structure interne de la cellule factice s'approche de celle d'une véritable cellule électrochimique qui comprend généralement une succession d'éléments conducteurs électriquement (cathode ou anode), qui sont également conducteurs thermiquement, et d'électrolytes conducteurs ioniques, qui sont également isolants thermiquement. Ceci permet de façon avantageuse de mieux reproduire le comportement de cet assemblage d'un point de vue thermique.

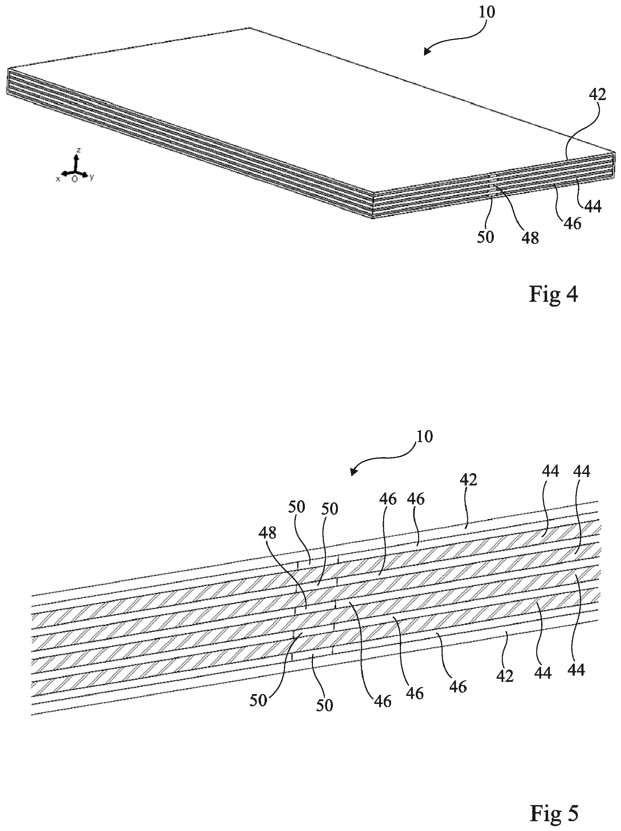

Les figures 4 et 5 sont des vues en perspective avec coupe, partielles et schématiques, d'un mode de réalisation d'une cellule électrochimique factice 10 adaptée au cas où la cellule électrochimique à simuler présente une symétrie planaire, notamment dans le cas d'un accumulateur électrique prismatique. La figure 5 est une vue agrandie de la figure 4. On note Oxyz un repère orthogonal.

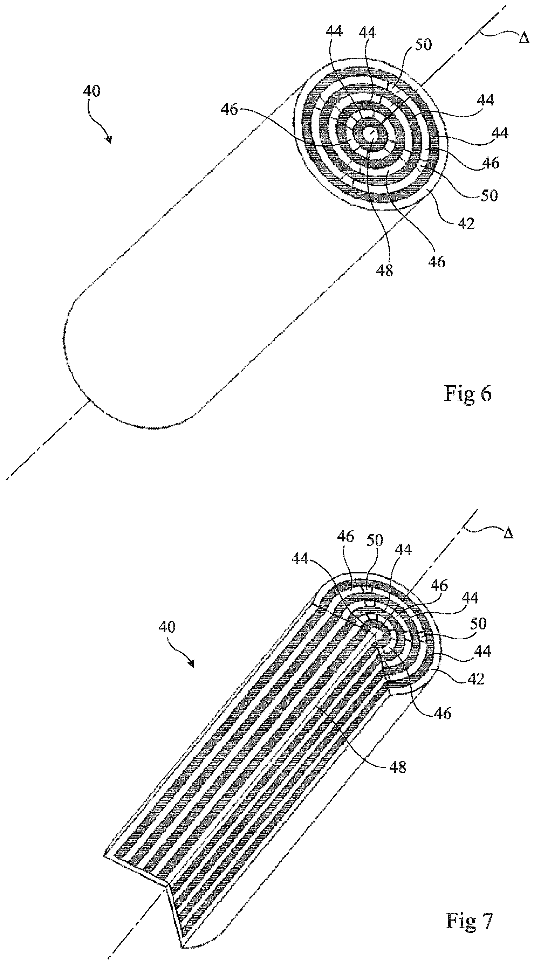

Les figures 6 et 7 sont des vues en perspective avec coupe, partielles et schématiques, d'un mode de réalisation d'une cellule électrochimique factice 40 adapté au cas où la cellule électrochimique à simuler présente une symétrie de rotation autour d'un axe Δ.

Chaque cellule 10 ou 40 comprend une enveloppe 42. Chaque cellule 10 ou 40 comprend en outre, dans l'enveloppe 42, une succession de plaques comprenant une alternance de plaques 44 conductrices électriquement et thermiquement et de plaques 46 isolantes électriquement et thermiquement. Dans le cas de la cellule 10, les plaques 44 et 46 sont sensiblement planes. Dans le cas de la cellule 40, les plaques 44 et 46 sont sensiblement cylindriques.

Chaque cellule 10 ou 40 comprend en outre, contenu dans la succession de plaques 44, 46, conductrices et isolantes, au moins un élément résistif 48 commandable. Dans le cas de la cellule 10, l'élément résistif 48 commandable peut être situé dans une plaque conductrice 44 ou dans une plaque isolante 46. Dans le cas de la cellule 40, l'élément résistif 48 commandable peut être situé le long de l'axe Δ. Chaque cellule 10 ou 40 comprend en outre au moins un pont thermique 50 en un matériau conducteur thermiquement. Chaque pont thermique 50 est situé dans l'une des plaques isolantes 46 et est en contact mécanique avec les deux plaques conductrices 44 entre lesquelles est située la plaque isolante 46.

Chaque élément résistif 48 commandable est un composant électrique émettant par effet Joule une puissance thermique de niveau commandable. Selon un mode de réalisation, l'élément résistif 48 est alimenté en électricité par des fils conducteurs non représentés. L'élément résistif 48 est isolé électriquement des plaques conductrices 44 avec lesquelles il peut être en contact mécanique. A titre d'exemple, chaque élément résistif 48 peut être encapsulé dans une plaque isolante électriquement, par exemple une céramique ou certains matériaux polymère, notamment le polyimide commercialisé sous l'appellation Kapton®.

L'enveloppe 42 peut être en matériau polymère ou métallique. L'épaisseur de l'enveloppe 42 peut être comprise entre 0,1 mm et 3 mm.

Dans le mode de réalisation de cellule factice prismatique représenté sur les figures 4 et 5, les plaques conductrices 44 ont toutes la même longueur mesurée selon la direction Oy, la même largeur mesurée selon la direction Ox et la même épaisseur mesurée selon la direction Oz. Selon un autre mode de réalisation, les plaques conductrices 44 peuvent avoir des longueurs, des largeurs et/ou des épaisseurs différentes. De façon analogue, dans le mode de réalisation de cellule cylindrique représenté sur les figures 6 et 7, les plaques conductrices 44 ont toutes la même longueur mesurée selon l'axe Δ, et la même épaisseur mesurée radialement par rapport à l'axe Δ. Selon un autre mode de réalisation, les plaques conductrices 44 peuvent avoir des longueurs et/ou des épaisseurs différentes. Les plaques conductrices 44 dont la largeur et/ou la longueur sont inférieures à celles des plaques isolantes 46 peuvent être entourées par des bords isolants du même matériau que les plaques isolantes 46. De préférences, les plaques conductrices 44, dont la largeur et/ou la longueur sont inférieures à celles des plaques isolantes 46, peuvent être centrées par rapport à l'axe de symétrie de la cellule parallèle à la direction Oz ou l'axe Δ.

Selon un mode de réalisation, chaque plaque isolante 46 est en un matériau dont la masse volumique est comprise entre 80 kg/m³ et 2500 kg/m³, de préférence entre 950 kg/m³ et 2500 kg/m³, plus préférentiellement entre 1000 kg/m³ et 1500 kg/m³, par exemple 1050 kg/m³. Selon un mode de réalisation, chaque plaque isolante 46 est en un matériau dont la chaleur spécifique, également appelée capacité thermique massique, à 20°C est comprise entre 1000 Jkg⁻¹K⁻¹ et 1500 Jkg⁻¹K⁻¹, de préférence entre 1150 Jkg⁻¹K⁻¹ et 1350 Jkg⁻¹K^{- 1}. Selon un mode de réalisation, chaque plaque isolante 46 est en un matériau dont la conductivité thermique est comprise entre 0,02 Wm⁻¹K⁻¹ et 5 Wm⁻¹K⁻¹, de préférence entre 0,15 Wm⁻¹K^{- 1} et 0,25 Wm⁻¹K⁻¹, par exemple 0,2 Wm⁻¹K⁻¹. Selon un mode de réalisation, chaque plaque isolante 46 est en un polymère tenant en température à plus de 90°C, notamment un polymère compris dans le groupe comprenant l'acrylonitrile butadiène styrène (ABS), les polyaryléthers (PPE), le polytétrafluoroéthylène (PTFE), le polytéréphtalate d'éthylène (PET) et le polytéréphtalate de butylène (PBT). L'épaisseur de chaque plaque isolante 46 peut être comprise entre 0,1 mm et 3 mm. Les plaques isolantes 46 peuvent avoir des épaisseurs différentes.

Selon un mode de réalisation, chaque plaque conductrice 44 est en un matériau dont la masse volumique est comprise entre 2000 kg/m³ et 10000 kg/m³. Selon un mode de réalisation, chaque plaque conductrice 44 est en un matériau dont la chaleur spécifique, également appelée capacité thermique massique, à 20°C est comprise entre 200 Jkg⁻¹K⁻¹ et 900 Jkg⁻¹K⁻¹, de préférence entre 300 Jkg⁻¹K⁻¹ et 600 Jkg⁻¹K⁻¹. Selon un mode de réalisation, chaque plaque conductrice 44 est en un matériau dont la conductivité thermique est comprise entre 20 Wm⁻¹K⁻¹ et 500 Wm⁻¹K⁻¹. Selon un mode de réalisation, chaque plaque conductrice 44 est en un matériau compris dans le groupe comprenant le cuivre, l'aluminium, le laiton et l'acier. L'épaisseur de chaque plaque conductrice 44 peut être comprise entre 0,1 mm et 5 mm. Les plaques conductrices 44 peuvent avoir des épaisseurs différentes.

Les dimensions de chaque plaque conductrice 44 et de chaque plaque isolante 46 sont adaptées aux dimensions de la cellule électrique à simuler. Dans le cas de la cellule prismatique 10, la largeur et la longueur de chaque plaque plane conductrice 44 mesurées dans le plan (Oxy) sont comprises entre 10 mm et 500 mm et la largeur et la longueur de chaque plaque plane isolante 46 mesurées dans le plan (Oxy) sont comprises entre 10 mm et 500 mm. Dans le cas de la cellule cylindrique 40, la longueur selon l'axe Δ de chaque plaque cylindrique conductrice 44 est comprise entre 10 mm et 500 mm et la longueur selon l'axe Δ de chaque plaque cylindrique isolante 46 est comprise entre 10 mm et 500 mm.

Selon un mode de réalisation, chaque pont thermique 50 a les propriétés indiquées précédemment pour les plaques conductrices 44. Selon un mode de réalisation, chaque pont 50 est dans l'un des matériaux indiqués précédemment pour les plaques conductrices 44. Dans le cas de la cellule prismatique 10, la largeur et la longueur de chaque pont thermique 50 mesurées dans le plan (Oxy) sont comprises entre 1 mm et 10 mm. Dans le cas de la cellule cylindrique 40, la longueur selon l'axe Δ de chaque pont thermique 50 est comprise entre 1 mm et 10 mm.

Les dimensions et le nombre d'éléments résistifs 48 dépendent de la cellule électrique à simuler. De préférence, chaque élément résistif 48 est contenu dans un parallélépipède rectangle dont la longueur est comprise entre 5 mm et 500 mm, la largeur est comprise entre 1 mm et 100 mm et la hauteur est comprise entre 0,25 mm et 10 mm.

Le pack batterie factice 30 peut être utilisé pour simuler le comportement thermique d'un véritable pack batterie. Lors d'une simulation, les éléments résistifs 48 des cellules factices 10, 40 sont commandés pour simuler l'échauffement souhaité des cellules factices. En outre, les éléments chauffants 14, 34 des éléments de connexion, notamment les collecteurs 12 et les barres omnibus 32, sont commandés pour simuler l'échauffement des éléments de connexion qui résulte du courant circulant dans ces éléments de connexion lors du fonctionnement d'un véritable pack batterie. Selon un mode de réalisation, les éléments chauffants 14, 34 peuvent être commandés séparément. En particulier, les puissances électriques fournies à deux éléments chauffants 14, 34 différents peuvent être différentes. Selon un mode de réalisation, la puissance électrique injectée dans un élément de connexion est comprise entre 5 % et 30 % de la puissance électrique injectée dans un accumulateur factice voisin de l'élément de connexion considéré. La puissance électrique injectée dans chaque élément de connexion varie par exemple de 0,1 W à 20 W. Il est ainsi possible de simuler le comportement thermique d'un pack batterie complet, notamment pour tester l'efficacité de différents systèmes de refroidissement, par exemple mettant en oeuvre une circulation forcée d'air, une circulation forcée de fluides diélectriques, des plaques froides ou des matériaux à changement de phase.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art. Enfin, la mise en oeuvre pratique des modes de réalisation et variantes décrits est à la portée de l'homme du métier à partir des indications fonctionnelles données ci-dessus.

## Revendications

1. Batterie d'accumulateurs factice (1 ; 30) comprenant au moins une première cellule électrochimique de stockage d'énergie factice (10) et un premier élément de connexion (12 ; 32) en contact avec la première cellule factice, ledit premier élément de connexion étant en un premier matériau conducteur thermiquement, la batterie d'accumulateurs factice comprenant en outre un premier élément chauffant (14) en contact avec le premier élément de connexion.

2. Batterie d'accumulateurs factice selon la revendication 1, comprenant deux conducteurs électriques (22, 24) connectés audit premier élément chauffant (14).

3. Batterie d'accumulateurs factice selon la revendication 2, comprenant une enceinte (16) contenant la première cellule factice, les conducteurs électriques (22, 24) s'étendant au moins en partie à l'extérieur de l'enceinte.

4. Batterie d'accumulateurs factice selon l'une quelconque des revendications 1 à 3, comprenant en outre une deuxième cellule électrochimique de stockage d'énergie factice (10) et un deuxième élément de connexion (12 ; 32) en contact avec la deuxième cellule factice, ledit deuxième élément de connexion étant en un deuxième matériau conducteur thermiquement, identique ou différent du premier matériau conducteur thermiquement, la batterie d'accumulateurs factice comprenant en outre un deuxième élément chauffant (14) en contact avec le deuxième élément de connexion.

5. Batterie d'accumulateurs factice selon la revendication 4, comprenant en outre un troisième élément de connexion (32), en un troisième matériau conducteur thermiquement, identique ou différent du premier matériau conducteur thermiquement, connecté au premier élément de connexion (12) et au deuxième élément de connexion, la batterie d'accumulateurs factice comprenant en outre un troisième élément chauffant (14) en contact avec le troisième élément de connexion

6. Batterie d'accumulateurs factice selon l'une quelconque des revendications 1 à 5, dans laquelle la première cellule factice (10) comprend, dans une enveloppe (42) :
- une alternance de plaques conductrices thermiquement (44) et de plaques isolantes thermiquement (46) ;
- au moins, pour l'une des plaques isolantes thermiquement interposées entre deux plaques conductrices thermiquement, un pont thermique conducteur thermiquement (50) présent dans ladite plaque isolante thermiquement et connecté mécaniquement auxdites deux plaques conductrices thermiquement ; et
- au moins un élément résistif (48) et des fils électriques connectés à l'élément résistif et s'étendant à l'extérieur de l'enveloppe.

7. Batterie d'accumulateurs factice selon la revendication 6, comprenant au moins deux ponts thermiques conducteurs thermiquement (50) connectés à des plaques conductrices thermiquement (44) différentes.

8. Batterie d'accumulateurs factice selon la revendication 6 ou 7, dans laquelle les plaques conductrices thermiquement (44) et les plaques isolantes thermiquement (46) sont planes ou cylindriques.

9. Batterie d'accumulateurs factice selon l'une quelconque des revendications 6 à 8, dans laquelle les plaques conductrices thermiquement (44) sont métalliques.

10. Batterie d'accumulateurs factice selon l'une quelconque des revendications 6 à 9, dans laquelle les plaques isolantes thermiquement (46) sont en polymère.
